# EUROPEAN PATENT APPLICATION

(11) **EP 4 588 707 A1**
(43) Date of publication of application: **23.07.2025**
(21) Application number: 22958304.2
(22) Date of filing: 16.09.2022
(51) Int. Cl.: B60K 20/02, G05G 1/02

(54) **SWITCH DEVICE FOR SHIFT OPERATION**

(71) Applicant: NISSAN MOTOR CO., LTD., Kanagawa 221-0023 (JP)
(72) Inventor: TANAKA Naoyuki, Atsugi-shi, Kanagawa 243-0123 (JP); SHIMIZU Shunichi, Atsugi-shi, Kanagawa 243-0123 (JP)
(74) Representative: Global IP Europe Patentanwaltskanzlei
(86) International application number: PCT/JP2022/034750
(87) International publication number: WO 2024/057530

(57) **Abstract**

A switch device (1) includes a plurality of switch parts (10), the plurality of switch parts including at least one first switch part (10a, 10c, 10d), and a second switch part (10b). A first operation button (20a, 20c, 20d) of the at least one first switch part (10a, 10c, 10d) moves in a first direction in response to a first operation where the first operation button (20a, 20c, 20d) is pushed down, and a second operation button (20b) of the second switch part (10b) rotates around a support shaft (26) extending to cross the first direction in response to a second operation where the second operation button (20b) is pushed down or pulled up.

## Description

### TECHNICAL FIELD

The present invention relates to a switch device for shift operation.

### BACKGROUND ART

The switch device for shift operation disclosed in Patent Literature 1 includes a switch unit, a linear encoder, and a control unit. The switch unit selects a shift position of a shift device of a vehicle by means of a push button. The linear encoder detects a push operation state in response to the push operation of the switch unit. The control unit controls presentation of a reaction force in response to the push operation of the switch unit according to the shift position, in a reaction force presentation state different from the steady-state reaction force presentation.

### CITATION LIST

### PATENT LITERATURE

Patent Literature 1: JP 2012-216113 A

### SUMMARY OF INVENTION

### TECHNICAL PROBLEM

In a by-wire type shift device that electrically performs shift operation for switching the transmission gear of a vehicle, the shift operation is performed by operating multiple switch parts disposed at a predetermined position in the vehicle cabin, for example. Here, if operation methods of the multiple switch parts are configured in the same manner, incorrect shift operation may be performed.

An object of the present invention is to provide a switch device for shift operation capable of controlling incorrect shift operation.

### TECHNICAL SOLUTION

A switch device for shift operation according to an embodiment of the present invention includes a plurality of switch parts, the plurality of switch parts including at least one first switch part, and a second switch part. A first operation button of the at least one first switch part moves in a first direction in response to a first operation where the first operation button is pushed down, and a second operation button of the second switch part rotates around a support shaft extending to cross the first direction in response to a second operation where the second operation button is pushed down or pulled up.

### ADVANTAGEOUS EFFECTS

The present invention provides a switch device for shift operation capable of controlling incorrect shift operation.

### BRIEF DESCRIPTION OF DRAWINGS

[FIG. 1] A schematic view in the vicinity of an instrument panel of a vehicle, illustrating an example of a position of a switch device for shift operation according to an embodiment in a vehicle cabin.
[FIG. 2] A partial plan view of the switch device for shift operation according to the embodiment, illustrating a connection relationship between the switch device for shift operation, a shift ECU, and a shift device.
[FIG. 3] A partial perspective view of the switch device for shift operation according to the embodiment, illustrating a positional relationship between a first operation button, and a second operation button that can be operated by pushing down.
[FIG. 4] A partial perspective view of the switch device for shift operation according to the embodiment, illustrating a positional relationship between the first operation button, and a second operation button that can be operated by pulling up.
[FIG. 5] A partial sectional view illustrating the structure of a first switch part of the switch device for shift operation according to the embodiment, along the line V-V in FIG. 2.
[FIG. 6] A partial sectional view corresponding to FIG. 5, illustrating behavior of the first switch part when the first operation button is pushed down, in the switch device for shift operation according to the embodiment.
[FIG. 7] A partial sectional view illustrating the structure of a second switch part including the second operation button, which can be operated by pushing down, in the switch device for shift operation according to the embodiment, along the line VII-VII in FIG. 2.
[FIG. 8] A partial sectional view corresponding to FIG. 7, illustrating behavior of the second switch part when the second operation button is pushed down in the switch device for shift operation according to the embodiment.
[FIG. 9] A partial sectional view illustrating the structure of the second switch part including the second operation button, which can be operated by pulling up, in the switch device for shift operation according to the embodiment, along the line IX-IX in FIG. 4.
[FIG. 10] A partial cross-sectional view corresponding to FIG. 9, illustrating behavior of the second switch part when the second operation button is pulled up in the switch device for shift operation according to the embodiment.

### DESCRIPTION OF EMBODIMENTS

A switch device for shift operation according to an embodiment will be described below with reference to the drawings. Elements having the same function in the drawings will be denoted by the same reference numeral, and overlapping description will be omitted.

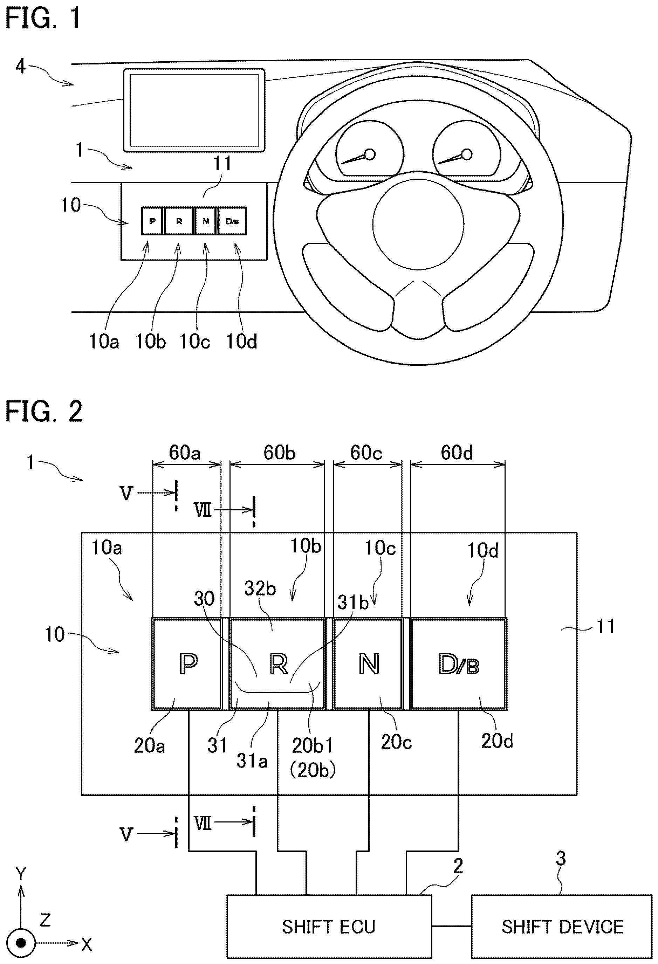

The longitudinal direction of a switch device 1 illustrated in FIG. 2, from the left to the right of the switch device 1, is defined as a positive X-axis direction. The direction opposite to the positive X-axis direction is defined as a negative X-axis direction. The lateral direction of the switch device 1, which is orthogonal to the positive X-axis direction, from the bottom to the top in FIG. 2, is defined as a positive Y-axis direction. The direction opposite to the positive Y-axis direction is designated as a negative Y-axis direction. In addition, the direction orthogonal to the positive X-axis direction and the positive Y-axis direction, from the back side of the page space toward the near side of the page space in FIG. 2, is defined as a positive Z-axis direction. The direction opposite to the positive Z-axis direction is defined as a negative Z-axis direction. Note that in the following description, the positive X-axis direction and the negative X-axis direction are simply referred to as "X-axis direction", the positive Y-axis direction and the negative Y-axis direction are simply referred to as "Y-axis direction", and the positive Z-axis direction and the negative Z-axis direction are simply referred to as "Z-axis direction". The Z-axis direction corresponds to a first direction, and the X-axis direction corresponds to a second direction.

The switch device 1 as a switch device for shift operation according to the embodiment is operated by an occupant of a vehicle when the occupant performs shift operation. The occupant can switch the shift range of a shift device 3 (see FIG. 2) by using the switch device 1. The shift device 3 may be, for example, an automatic transmission, and performs switching of the shift range in response to operation performed on the switch device 1. Note that the shift range is a state, such as the arrangement of transmission gears (not illustrated) in the shift device 3 of the vehicle, and is also called a shift position. The shift range may include, for example, a parking range, a reverse range, a neutral range, and a drive range. The shift device 3 exemplified in the figure is a by-wire type device that electrically performs shift operation to switch the transmission gear of the vehicle in response to the operation by the occupant. Note that in the following description, the parking range, reverse range, neutral range, and drive range are referred to as "P-range", "R-range", "N-range", and "D-range", respectively. The P-range is a shift range set when the vehicle is parked. The R-range is a shift range set when the vehicle is moved backward. The N-range is a shift range set when preventing the vehicle engine power from being transmitted to the drive wheels. The D-range is a shift range set when the vehicle is moved forward.

In the example illustrated in FIG. 1, the switch device 1 is provided on an instrument panel 4 disposed in the vehicle cabin. The instrument panel 4 forms the interior of the vehicle cabin on the front side in the longitudinal direction of the vehicle. Note that the position of the switch device 1 is not limited to the illustrated example, and the switch device 1 may be disposed on a center console (not illustrated), for example. As illustrated in FIG. 2, a shift ECU 2 (electronic control unit) is electrically connected to the switch device 1, and the shift device 3 is electrically connected to the shift ECU 2. The shift ECU 2 is a general-purpose microcomputer equipped with a CPU (central processing unit), a memory, an input/output unit, and the like. A computer program including predetermined rules or instructions for controlling the shift device 3 is installed in the memory of the microcomputer. By executing the computer program, the microcomputer can control the shift device 3.

When any of switch parts 10a to 10d described below is operated by the occupant, a signal corresponding to the operated switch part is output from the switch device 1 to the shift ECU 2. When receiving the signal, the shift ECU 2 outputs a signal instructing the shift device 3 to switch the shift range. When receiving the signal output from the shift ECU 2, the shift device 3 switches the position of the transmission gear in such a manner that the arrangement corresponds to a predetermined shift range. In this way, the occupant of the vehicle can perform shift operation of the vehicle by operating the switch device 1.

The switch device 1 includes multiple switch parts 10. The multiple switch parts 10 are arranged in the vehicle cabin, and operated by the occupant of the vehicle during shift operation. At least part of a vehicle cabin side surface of each of the multiple switch parts 10 is configured of an operation button. The operation button is a portion to be pushed down by the occupant during shift operation. The multiple switch parts 10 may include at least one first switch part, and a second switch part. The second switch part is disposed adjacent to the first switch part. In the example illustrated in FIG. 2, the multiple switch parts 10 include the switch part 10a, the switch part 10c, and the switch part 10d as the first switch part, and include the switch part 10b as the second switch part. The switch part 10b is arranged directly adjacent to the positive X-axis direction side of the switch part 10a. The switch part 10b is arranged directly adjacent to the negative X-axis direction side of the switch part 10c. The switch part 10d is arranged directly adjacent to the positive X-axis direction side of the switch part 10c. That is, the switch part 10b as the second switch part is directly adjacent to the switch parts 10a and 10c of the first switch part. In this way, the multiple switch parts 10 may be disposed to be aligned in the X-axis direction, which is the second direction. Note that the switch parts 10a to 10d may be disposed to be separated from each other by a predetermined distance.

Each of the switch parts 10a to 10d is configured to set the shift device 3 to a different shift range. For example, the switch part 10a may be configured to perform shift operation to set the shift range to the P-range. The switch part 10b may be configured to perform shift operation to set the shift range to the R-range. The switch part 10c may be configured to perform shift operation to set the shift range to the N-range. The switch part 10d may be configured to perform shift operation to set the shift range to the D-range.

Note that the number of switch parts provided in the switch device 1 is not limited to the illustrated example. For example, the switch device 1 may include a further switch part in addition to the switch parts 10a to 10d. The switch device 1 may be configured by two or three switch parts. In the illustrated example, the switch parts 10a to 10d are arranged in the positive X-axis direction to be adjacent to each other in this order, but the order where the switch parts included in the multiple switch parts 10 are arranged is not limited to this. For example, the switch parts 10a to 10d may be arranged in the negative X-axis direction to be adjacent to each other in this order. The multiple switch parts 10 may be arranged in the Y-axis direction. For example, the switch parts 10a to 10d may be arranged in the negative Y-axis direction to be adjacent to each other in this order.

The first switch part includes a first operation button. The first operation button makes up a portion of the first switch part, which is pushed down by the occupant during shift operation. The first operation button makes up at least part of the vehicle cabin side surface of the first switch part. The occupant can switch the shift range of the shift device 3 through the first switch part by pushing down the first operation button. The second switch part includes a second operation button. The second operation button makes up a portion of the second switch part, which is operated by the occupant during shift operation. The second operation button makes up at least part of the vehicle cabin side surface of the second switch part. For example, the occupant can switch the shift range of the shift device 3 through the second switch part by operating the second operation button.

As in examples illustrated in FIGS. 2 to 4, the switch part 10a, the switch part 10c, and the switch part 10d may include buttons 20a, 20c, and 20d, respectively, as the first operation button. The switch part 10b may include a button 20b as the second operation button. Note that, as in the illustrated example, the vehicle cabin side surface of each of the buttons 20a to 20d may form substantially the same surface as the vehicle cabin side surface of a peripheral part 11. The peripheral part 11 is a resin or metal panel material surrounding the periphery of the buttons 20a to 20d, and may make up part of the vehicle cabin side surface of the instrument panel 4 (see FIG. 1).

As exemplified in the figures, each of the buttons 20a to 20d has a substantially rectangular shape in an axial view parallel to the negative Z-axis direction, and may be made of a resin, for example. Dimensions 60a to 60d illustrated in FIG. 2 are of the buttons 20a to 20d in the X-axis direction, respectively. The dimension 60a of the button 20a and the dimension 60c of the button 20c may be substantially equal. The dimension 60b of the button 20b and the dimension 60d of the button 20d may be substantially equal.

In the illustrated example, the dimensions 60a and 60c are set to smaller values than the dimensions 60b and 60d. That is, the switch parts 10a, 10c, and 10d may include the buttons 20a and 20c having the dimensions 60a and 60c smaller than the dimension 60b of the button 20b. Thus, the switch device 1 can be provided, which associates a frequently used shift operation with the switch part 10b, and can more easily perform the shift operation. Note that an operation button whose dimension is set larger is not limited to the button 20b, and the dimension 60d of the button 20d may be set larger than the dimensions 60a and 60c, as exemplified in the figures. In addition, a frequently used shift operation may be associated with the switch part 10d.

An operation button having a dimension smaller than the dimension 60b of the button 20b in the first switch part may be of a switch part arranged directly adjacent to the switch part 10b. In the illustrated example, the dimensions 60a and 60c of the buttons 20a and 20c directly adjacent to the button 20b are set smaller than the dimension 60b. Note that the dimensions of the buttons 20a to 20d in the Y-axis direction may be configured substantially the same. Thus, it is possible to make the dimension of the switch device 1 in the negative Y-axis direction smaller, and to set the dispose position of the switch device 1 in the vehicle cabin more freely. The shapes and dimensions of the operation buttons are not limited to the illustrated example, and may be set according to the dimension and shape of the switch device 1, functions assigned to switch parts, and the like.

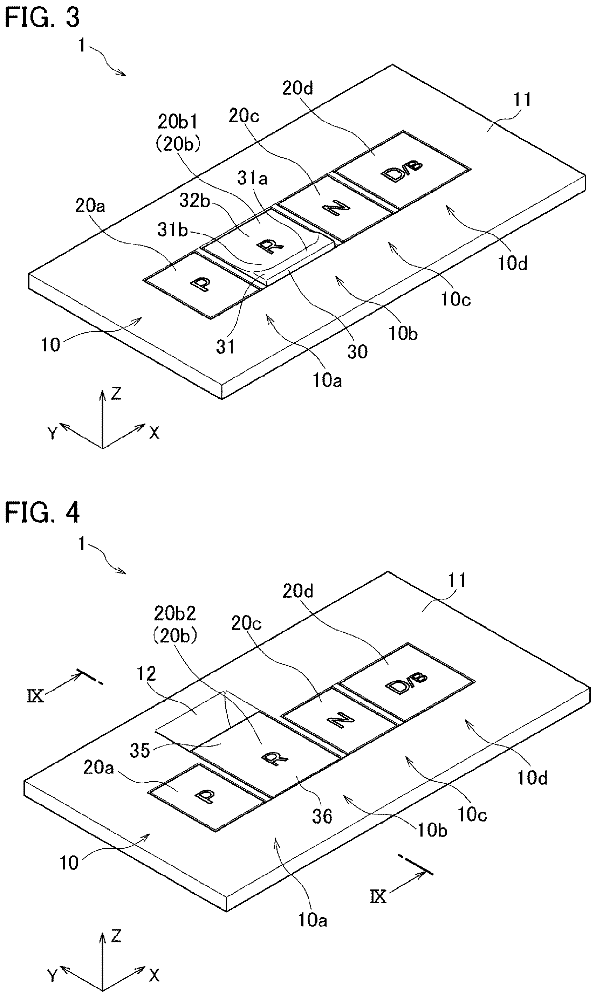

Next, with reference to FIGS. 3 to 10, the mode and structure of operation performed in shift operation at each of the multiple switch parts 10 will be described.

The buttons 20a, 20c, and 20d, and the button 20b differ in behaviors in response to an operation by the occupant when performing shift operation. Thus, the occupant can easily distinguish between the switch parts 10a, 10c, and 10d, and the switch part 10b when performing shift operation. Note that in the illustrated example, the structures of the switch part 10a, switch part 10c, and switch part 10d are configured substantially the same. Thus, in the following description, the structure of the switch part 10a will be typically described, and the description of the structure of the switch parts 10c and 10d will be omitted.

First, the switch part 10a will be described with reference to FIGS. 3, 5, and 6. For example, when setting the shift range of the shift device 3 to the P-range, the occupant performs a push down operation as the first operation. The push down operation is an operation where the button 20a is pushed down in the negative Z-axis direction. That is, the button 20a may be an operation button operated when the shift range of the vehicle is set to the P-range. By the first operation, the button 20a moves in the negative Z-axis direction. That is, the button 20a moves in the Z-axis direction, which is the first direction, in response to the push down operation by the occupant. Note that the button 20c may be an operation button operated when the shift range of the vehicle is set to the N-range. The button 20d may be an operation button operated when the shift range of the vehicle is set to the D-range.

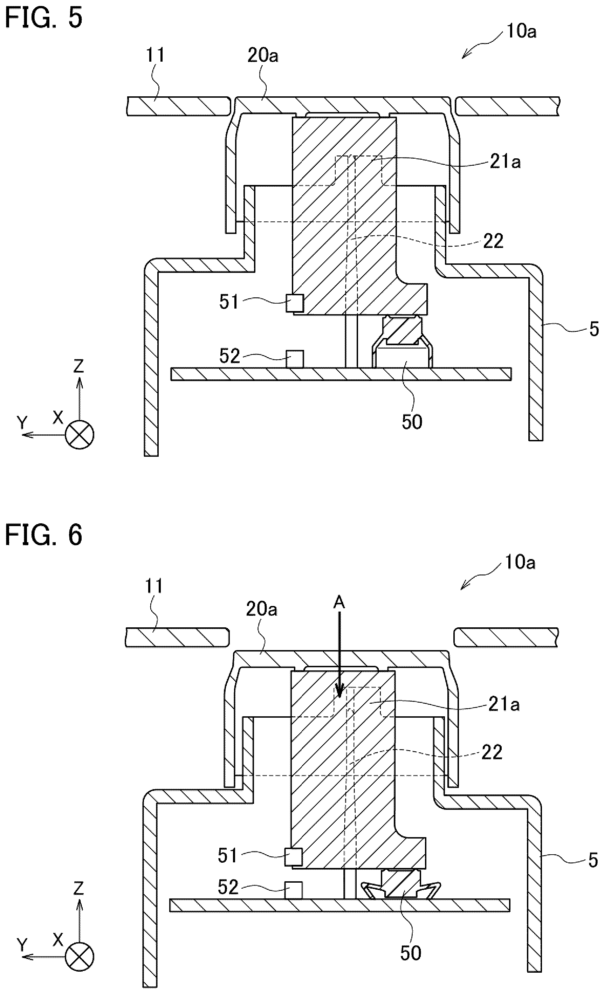

The button 20a is attached to a case 5 of the switch device 1 to be able to move in the Z-axis direction. The internal structure of the switch part 10a is not particularly limited, but as illustrated in FIGS. 5 and 6, for example, the switch part 10a may include an intermediate member 21a, an elastic member 50, a magnet 51, and a magnetic force sensor 52. Note that the case 5 is a member making up the exterior of the switch device 1, and may be made of a resin, for example. The case 5 may be configured to partition each of the multiple switch parts 10.

The intermediate member 21a exemplified in FIG. 5 is a member disposed in a region on the negative Z-axis direction side of the button 20a. The intermediate member 21a has a substantially rectangular shape in a cross section perpendicular to the X-axis direction, and may extend in the Z-axis direction. The intermediate member 21a is disposed in the internal space of the switch part 10a to be movable in the Z-axis direction along a guide part 22, for example. The guide part 22 may be a groove-like part extending in the Z-axis direction, formed at a predetermined location on the inner surface of the case 5. The end part of the intermediate member 21a on the positive Z-axis direction side is in contact with the button 20a.

The magnet 51 is attached to the intermediate member 21a, and in the illustrated example, is located at the end part of the intermediate member 21a on the positive Y-axis direction side and the negative Z-axis direction side. The magnetic force sensor 52 is arranged in a predetermined region on the negative Z-axis direction side of the magnet 51 in the internal space of the switch part 10a. The magnet 51 and the magnetic force sensor 52 are arranged to be separated from each other by a predetermined distance in the Z-axis direction. Note that the magnetic force sensor 52 is a sensor capable of detecting the magnetic force of the magnet 51.

When the occupant performs push down operation on the button 20a, the button 20a moves in the negative Z-axis direction, as illustrated by arrow A in FIG. 6. The intermediate member 21a moves in the negative Z-axis direction in response to the movement of the button 20a. The magnet 51 moves in the negative Z-axis direction in response to the movement of the intermediate member 21a. Thus, when the occupant pushes down the button 20a, the magnet 51 approaches the magnetic force sensor 52. When the magnet 51 approaches the magnetic force sensor 52 more than a predetermined distance, the magnetic force sensor 52 detects the magnetic force of the magnet 51, and a signal indicating that the switch part 10a has been operated is output from the switch part 10a to the shift ECU 2.

The elastic member 50 is arranged in a predetermined region on the negative Z-axis direction side of the intermediate member 21a in the internal space of the switch part 10a (see FIG. 5). Note that in the state illustrated in FIG. 5, the intermediate member 21a and the elastic member 50 are in contact with each other, but they are not limited to this. For example, the intermediate member 21a and the elastic member 50 may be arranged to be separated from each other by a predetermined distance in the Z-axis direction. When the occupant pushes down the button 20a, the elastic member 50 is compressed in the negative Z-axis direction by the intermediate member 21a, as illustrated in FIG. 6. Then, a repulsive force generated in the elastic member 50 is input to the button 20a through the intermediate member 21a. Thus, when the push down operation by the occupant is completed, the button 20a returns to the position before the push down operation. Note that the elastic member 50 exemplified in the figures has a hollow dome shape and is made of, for example, an elastic resin, but is not limited to this. The elastic member 50 may be, for example, a coil spring made of a metal.

Next, the switch part 10b will be described with reference to FIGS. 3, 4, and 7to 10. For example, when setting the shift range of the shift device 3 to the R range, the occupant performs a second operation that is an operation of pushing down or pulling up the button 20b. That is, the button 20b may be an operation button operated when the shift range of the vehicle is set to the R range. By the second operation, the button 20b rotates around a support shaft 26 described below. That is, the button 20b rotates around the support shaft 26 in response to the second operation by the occupant.

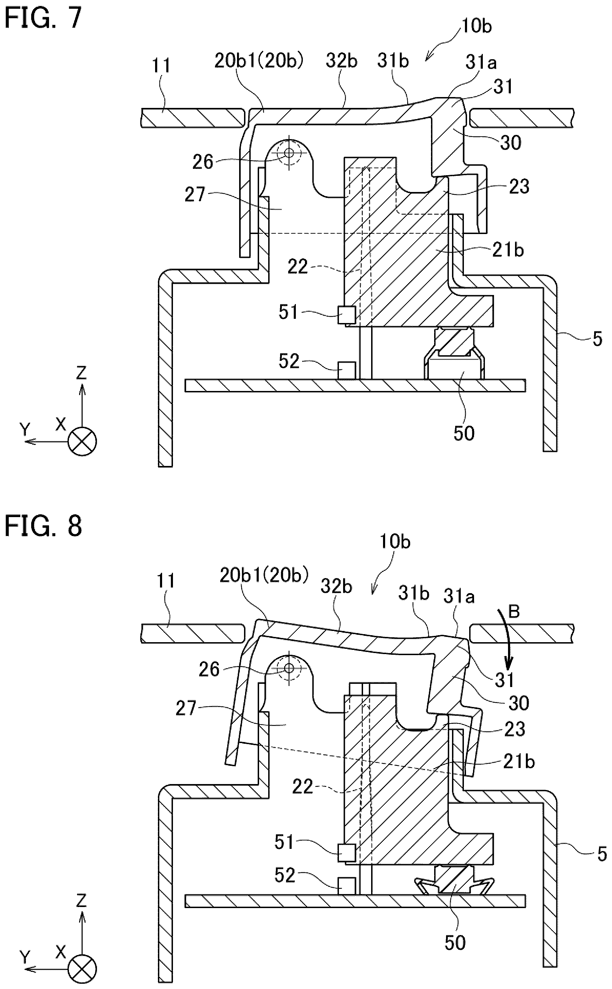

In the example illustrated in FIGS. 3, 7, and 8, the switch part 10b includes, as an example of the button 20b, a button 20b1 on which push down operation is performed. That is, the button 20b1 rotates around the support shaft 26 in response to the push down operation. The button 20b1 is supported by the case 5 through the support shaft 26. Thus, the button 20b1 can rotate around the support shaft 26 in a predetermined angle range. The support shaft 26 exemplified in FIG. 7 may be formed by projecting a predetermined part of a wall part 27 in the X-axis direction. That is, the support shaft 26 may extend in the X-axis direction. The wall part 27 may make up part of the case 5 of the switch device 1, and may extend in the Y-axis direction.

The button 20b1 may include a push in part 30. The push in part 30 is a part of the button 20b1, which rotates around the support shaft 26 in the push down direction in response to the push down operation by the occupant. The push in part 30 may have a convex part 31. The convex part 31 is formed to project from a surface of the push in part 30 on the opposite side to the push down direction. Note that the convex part 31 may project more toward the vehicle cabin than the vehicle cabin side surface of the peripheral part 11. The switch part 10b may include a regulating part (not illustrated) for regulating the rotation of the push in part 30 in such a manner that the push in part 30 does not rotate around the support shaft 26 in the positive Z-axis direction.

The support shaft 26 may support an end part of the button 20b1 on the positive Y-axis direction side. The push in part 30 may be set at an end part of the button 20b1, on the opposite side in the Y-axis direction from the end part supported by the support shaft 26. For example, the push in part 30 may be set at the end part of the button 20b1 on the negative Y-axis direction side. By inputting a load in the negative Z-axis direction to the push in part 30, the occupant can more reliably push down the button 20b1. That is, in response to the operation by the occupant, the push in part 30 can be more reliably rotated toward the negative Z-axis direction. Thus, the switch part 10b can more reliably switch the shift range of the shift device 3 in response to the operation by the occupant. At this time, the convex part 31 may be formed at the end part of the vehicle cabin side surface of the button 20b1 on the negative Y-axis direction side. The convex part 31 may extend between both end parts of the button 20b1 in the X-axis direction (see FIG. 3). Note that a part corresponding to the convex part 31 need not be formed on the surfaces of the buttons 20a, 20c, and 20d on the opposite side to the push down direction. That is, the convex part 31 may be formed only on the button 20b1 among the operation buttons of the multiple switch parts 10.

Note that the convex part 31 may include a top part 31a, and an inclined part 31b. The top part 31a forms an end part in a direction where the convex part 31 projects. The top part 31a may extend substantially parallel to a main surface 32b. The inclined part 31b is a surface that inclines downward from the top part 31a toward the main surface 32b, thus connecting the two. The main surface 32b is a surface on the vehicle cabin side of the button 20b1 on which the convex part 31 is not formed, and may be a surface substantially perpendicular to the Z-axis direction.

Note that the direction where the support shaft 26 extends is not limited to the illustrated example. For example, the support shaft 26 may extend in the Y-axis direction. In this case, the end part of the button 20b1 in the X-axis direction may be set as the push in part 30. In addition, the direction where the support shaft 26 extends need not be orthogonal to the Z-axis direction. That is, it is sufficient that the support shaft 26 extend to cross the Z-axis direction. The part of the button 20b1 supported by the support shaft 26 is not limited to the illustrated example. For example, the support shaft 26 may support the end part of the button 20b1 on the positive Y-axis direction side.

Although the internal structure of the switch part 10b is not particularly limited, as illustrated in FIGS. 7 and 8, the switch part 10b may include an intermediate member 21b, the elastic member 50, the magnet 51, and the magnetic force sensor 52.

The intermediate member 21b corresponds to the intermediate member 21a of the switch part 10a. The intermediate member 21b exemplified in the figures is arranged in a region of the button 20b1 on the negative Z-axis direction side. The intermediate member 21b has a substantially rectangular shape in a cross section perpendicular to the X-axis direction, and may extend in the Z-axis direction. The intermediate member 21b is disposed in the internal space of the switch part 10b to be movable in the Z-axis direction along the guide part 22, for example.

A contact part 23 is formed in the intermediate member 21b. The contact part 23 is a part of the intermediate member 21b in contact with the button 20b1. The contact part 23 exemplified in the figures is formed in a part of the intermediate member 21b on the negative Y-axis direction side and the positive Z-axis direction side. In a cross section perpendicular to the X-axis direction, the contact part 23 may have a shape projecting in the positive Z-axis direction.

The magnet 51 is attached to the intermediate member 21b. The magnet 51 may be located at the end part of the intermediate member 21b on the positive Y-axis direction side and the negative Z-axis direction side. The magnetic force sensor 52 is arranged in a predetermined region on the negative Z-axis direction side of the magnet 51 in the internal space of the switch part 10b. The magnet 51 and the magnetic force sensor 52 are arranged to be separated from each other by a predetermined distance in the Z-axis direction.

When the occupant performs push down operation on the button 20b1, the push in part 30 rotates around the support shaft 26 in the negative Z-axis direction, as illustrated by arrow B in FIG. 8. The intermediate member 21b moves in the negative Z-axis direction in response to the rotation of the push in part 30. At this time, a part of the push in part 30 on the negative Z-axis direction side may push down the intermediate member 21b while contacting with the contact part 23. The magnet 51 moves in the negative Z-axis direction along with the movement of the intermediate member 21b. Thus, when the occupant pushes down the button 20b1, the magnet 51 approaches the magnetic force sensor 52. When the magnet 51 approaches the magnetic force sensor 52 by more than a predetermined distance, a signal indicating that the switch part 10b has been operated is output from the switch part 10b to the shift ECU 2.

The elastic member 50 is arranged in a predetermined region on the negative Z-axis direction side of the intermediate member 21b in the internal space of the switch part 10b (see FIG. 7). Note that in the state illustrated in FIG. 7, the intermediate member 21b and the elastic member 50 are in contact with each other, but they are not limited to this. For example, the intermediate member 21b and the elastic member 50 may be arranged to be separated from each other by a predetermined distance in the Z-axis direction. When the occupant pushes down the button 20b1, the elastic member 50 is compressed in the negative Z-axis direction by the intermediate member 21b. Thus, a repulsive force generated in the elastic member 50 is input to the button 20b1 through the intermediate member 21b. Thus, when the push down operation by the occupant is completed, the button 20b1 returns to the position before the push down operation.

Note that the reaction force when an approximately center part of the button 20b1 in the Y-axis direction is pushed down may be larger than the reaction force when approximately center parts of the buttons 20a, 20c, and 20d are pushed down. Thus, it is possible to prevent the passenger from pushing down the button 20b1 by mistake for the buttons 20a, 20c, and 20d. That is, it is possible to provide the switch device 1 capable of distinguishing between the switch parts 10a, 10c, and 10d, and the switch part 10b more reliably.

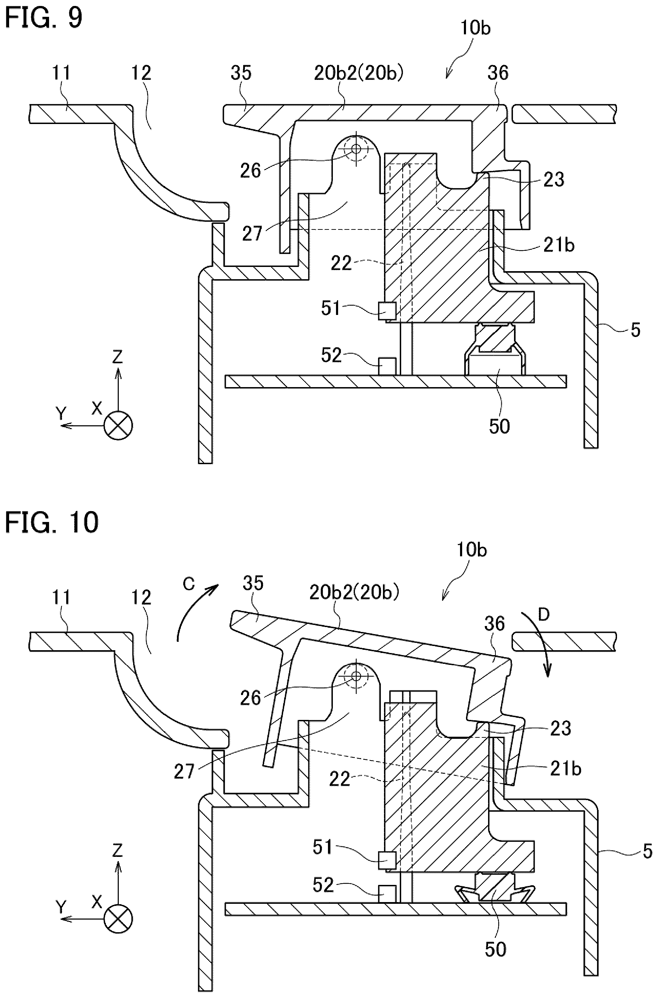

In the example exemplified in FIGS. 4, 9, and 10, as an example of the button 20b, the switch part 10b includes a button 20b2 which is pulled up. That is, the button 20b2 rotates around the support shaft 26 in response to the pull up operation. Note that when the switch part 10b includes the button 20b2, a concave part 12 may be formed in the peripheral part 11 (see FIG. 4). The concave part 12 may be formed by removing part of the peripheral part 11 toward the negative Z-axis direction. The concave part 12 exemplified in the figures is formed to be directly adjacent to a pull up part 35 of the button 20b2 described below, in the Y-axis direction. Thus, the pull up part 35 can be more easily pulled up when the occupant performs the pull up operation. The button 20b2 exemplified in FIGS. 9 and 10 is supported by the case 5 through the support shaft 26, and can rotate around the support shaft 26 in a predetermined angle range.

The button 20b2 may include a pull up part 35. The pull up part 35 is a part of the button 20b2 that rotates around the support shaft 26 in the pull up direction in response to the pull up operation by the occupant. The pull up part 35 exemplified in the figures is formed at an end part of the button 20b2 on the positive Y-axis direction side. The pull up part 35 may have a shape projecting toward the positive Y-axis direction in a cross section perpendicular to the X-axis direction. The pull up part 35 may extend between both end parts of the button 20b2 in the X-axis direction (see FIG. 4). Note that the switch part 10b may include a regulating part (not illustrated) for regulating the rotation of the pull up part 35 in such a manner that the pull up part 35 does not rotate around the support shaft 26 in the negative Z-axis direction.

The position where the support shaft 26 supports the button 20b2 in the Y-axis direction is not limited to the illustrated example. For example, the position of the support shaft 26 may be determined in such a manner that a desired operating force is required when the pull up part 35 is operated. Note that as with the support shaft 26 of the switch part 10b including the button 20b1, the direction where the support shaft 26 of the switch part 10b including the button 20b2 extends is not limited to the illustrated example.

As with the switch part 10b including the button 20b1, the switch part 10b including the button 20b2 may include the intermediate member 21b, the elastic member 50, the magnet 51, and the magnetic force sensor 52 (see FIG. 9). The intermediate member 21b, the elastic member 50, the magnet 51, and the magnetic force sensor 52 may be configured in the same manner as the members in the switch part 10b including the button 20b1.

The intermediate member 21b exemplified in FIG. 9 is disposed in a region on the negative Z-axis direction side of the button 20b2. The contact part 23 of the intermediate member 21b is in contact with the button 20b2. When the occupant performs pull up operation on the button 20b2, the pull up part 35 rotates around the support shaft 26 in the positive Z-axis direction, as illustrated by arrow C in FIG. 10. Consequently, an end part 36 rotates around the support shaft 26 in the negative Z-axis direction, as illustrated by arrow D in the figure. The end part 36 is an end part of the button 20b2 located on the opposite side of the pull up part 35 across the support shaft 26 in the Y-axis direction. The end part 36 exemplified in the figure is a part of the button 20b2 on the negative Y-axis direction.

In response to the rotation of the end part 36, the intermediate member 21b moves in the negative Z-axis direction. At this time, a part of the end part 36 on the negative Z-axis direction may push down on the intermediate member 21b while contacting with the contact part 23. The magnet 51 moves in the negative Z-axis direction along with the movement of the intermediate member 21b. Thus, when the occupant pulls up the button 20b2, the magnet 51 approaches the magnetic force sensor 52. When the magnetic force sensor 52 detects the magnetic force of the magnet 51, a signal indicating that the switch part 10b has been operated is output from the switch part 10b to the shift ECU 2.

When the occupant pulls up the button 20b2, the elastic member 50 is compressed in the negative Z-axis direction by the intermediate member 21b (see FIG. 10). Thus, a repulsive force generated in the elastic member 50 is input to the button 20b2 through the intermediate member 21b. Thus, when the pull up operation by the occupant is completed, the button 20b2 returns to the position before the pull up operation.

The operation and effect of the switch device for shift operation 1 according to the embodiment will be described below.

(1) The switch device for shift operation 1 according to the embodiment includes a plurality of switch parts 10 that are disposed in a vehicle cabin of a vehicle and are operated when shift operation of the vehicle is performed. The plurality of switch parts 10 includes at least one of the first switch parts 10a, 10c, 10d , and the second switch part 10b disposed adjacent to the at least one of the first switch parts 10a, 10c, 10d. The first operation buttons 20a, 20c, and 20d of the at least one of the first switch parts 10a, 10c, 10d move in a first direction in response to a first operation where the first operation buttons 20a, 20c, and 20d are pushed down. The second operation button 20b of the second switch part 10b rotates around the support shaft 26 extending to cross the first direction, in response to a second operation where the second operation button 20b is pushed down or pulled up.

In the switch device 1 according to the embodiment, during shift operation, the buttons 20a, 20c, and 20d are pushed down to move in the Z-axis direction, which is a push down direction. In contrast, the button 20b is pushed down or pulled up during shift operation, and rotates around the support shaft 26. As described above, the buttons 20a, 20c, and 20d, and the button 20b are configured in such a manner that their behaviors in shift operation are different from each other. Thus, the occupant can more reliably distinguish between the switch parts 10a, 10c, and 10d, and the switch part 10b, thereby controlling the occurrence of incorrect shift operation. Consequently, it is possible to provide the switch device 1 capable of performing shift operation more accurately and improving the efficiency of shift operation more.

(2) The second operation button 20b may be pushed down in the second operation.

The switch part 10b can be operated by pushing down the button 20b in the same manner as the switch parts 10a, 10c, and 10d. Thus, it is possible to provide the switch device 1, which can be operated more easily. Furthermore, for example, the switch part 10b can be disposed without projecting the button 20b from the vehicle cabin side surface of the peripheral part 11 or providing the concave part 12 in the peripheral part 11. Thus, the structure of the switch device 1 or the peripheral part 11 can be made simpler. Consequently, the design of the switch device 1 or the peripheral part 11 can be made more freely.

(3) The second operation button 20b may include the push in part 30, which rotates around the support shaft 26 in the push down direction in response to the second operation. The push in part 30 may include the convex part 31 projecting from a surface of the push in part 30 on the opposite side to the push down direction.

Since the button 20b has the convex part 31, the occupant can more reliably identify the button 20b when performing shift operation. Thus, the occupant can more reliably distinguish between the switch parts 10a, 10c, and 10d, and the switch part 10b. Therefore, it is possible to provide the switch device 1, which can more reliably control the occurrence of incorrect shift operation.

Note that in the second operation, the second operation button 20b may be pulled up. Thus, the operation of the switch parts 10a, 10c, and 10d, and the operation of the switch part 10b when performing shift operation can be more reliably distinguished. Therefore, it is possible to provide the switch device 1, which can more reliably control incorrect shift operation and improve the efficiency of the shift operation.

(4) The plurality of switch parts 10 may be arranged in a second direction. The at least one first switch part 10a, 10c, 10d may include first operation buttons 20a and 20c having dimensions 60a and 60c in the second direction, which are smaller than a dimension 60b of the second operation button 20b in the second direction.

Thus, the occupant can more reliably distinguish between the switch parts 10a, 10c, and 10d, and the switch part 10b. Thus, it is possible to provide the switch device 1, which can more reliably control the occurrence of incorrect shift operation. Furthermore, for example, by associating a frequently used shift operation with the switch part 10b, it is possible to provide the switch device 1, which can more easily perform the shift operation and improve the efficiency of the shift operation.

Note that among the at least one first switch part 10a, 10c, 10d, the switch parts 10a, and 10c, having the first operation buttons 20a and 20c having dimensions smaller than the dimension 60b of the second operation button 20b, may be arranged directly adjacent to the second switch part 10b. Thus, it is possible to more reliably distinguish the button 20b from the buttons 20a and 20c adjacent to the button 20b. Therefore, it is possible to provide the switch device 1, which can more reliably control the occurrence of incorrect shift operation.

(5) The second operation button 20b may be an operation button which sets the shift range of the vehicle to the reverse range.

Thus, the occupant can more reliably distinguish the operation button for setting the shift range to the reverse range. Therefore, it is possible to provide the switch device 1, where the efficiency of shift operation for moving the vehicle backward is improved.

Note that among the first operation buttons 20a, 20c, and 20d, and the second operation button 20b, only the second operation button 20b may be the operation button for setting the shift range of the vehicle to the reverse range. Thus, the occupant can more reliably distinguish the operation button for setting the shift range to the reverse range.

### LIST OF REFERENCE NUMERALS

1 Switch device (switch device for shift operation)
10 Switch part
10a, 10c, 10d Switch parts (first switch parts)
10b Switch part (second switch part)
20a, 20c, 20d Buttons (first operation buttons)
20b Button (second operation button)
26 Support shaft
30 Push in part
31 Convex part
60a, 60b, 60c Dimensions

## Claims

1. A switch device for shift operation, comprising:
a plurality of switch parts that are disposed in a vehicle cabin of a vehicle and are operated when shift operation of the vehicle is performed, wherein
the plurality of switch parts include at least one first switch part, and a second switch part disposed adjacent to the at least one first switch part,
a first operation button of the at least one first switch part moves in a first direction in response to a first operation where the first operation button is pushed down, and
a second operation button of the second switch part rotates around a support shaft extending to cross the first direction in response to a second operation where the second operation button is pushed down or pulled up.

2. The switch device for shift operation according to claim 1, wherein the second operation button is pushed down in the second operation.

3. The switch device for shift operation according to claim 2, wherein
the second operation button includes a push in part that rotates around the support shaft in the push down direction in response to the second operation, and
the push in part includes a convex part that projects from a surface of the push in part on an opposite side to the push down direction.

4. The switch device for shift operation according to any one of claims 1 to 3, wherein
the plurality of switch parts are arranged in a second direction, and
the at least one first switch part includes the first operation button having a dimension in the second direction that is smaller than a dimension of the second operation button in the second direction.

5. The switch device for shift operation according to any one of claims 1 to 3, wherein
the second operation button is an operation button for setting a shift range of the vehicle to a reverse range.
